# EUROPEAN PATENT SPECIFICATION

(11) **EP 0 718 811 B1**
(45) Date of publication and mention of the grant of the patent: **18.03.1998**
(21) Application number: 94830589.1
(22) Date of filing: 23.12.1994
(51) Int. Cl.: G07F 7/00, G07F 7/06

(54) **A device for identifying objects**
Vorrichtung zum Identifizieren von Objekten
Dispositif destiné à l'identification d'objets

(43) Date of publication of application: 26.06.1996
(73) Proprietor: C.M.S. S.p.A., I-41054 Marano Sul Panaro, Modena (IT)
(72) Inventor: Salda, Luciano, I-41058 Vignola (Modena) (IT); Iattoni, Guido, I-41058 Vignola (Modena) (IT)
(74) Representative: Grünecker, Kinkeldey, Stockmair & Schwanhäusser Anwaltssozietät

(56) References cited:
- EP-A- 0 146 322
- EP-A- 0 301 978
- WO-A-85/05207
- US-A- 3 907 087

## Description

The invention relates, specifically but not exclusively, to a device which can be utilized in a used plastic cup collecting machine for identifying a cup introduced into the machine, comprising, apart from the device in object: a dispenser, for distributing a deposit return coin whenever the machine identifies a cup; and a bin, into which the collected cups are directed.

Various devices for identifying objects are known, especially for identifying plastic cups, such as for example those described in patent documents FR 2580418, FR 2631477, EP 0436446, and PCT/EP92/01820. In FR 2645305 cups are identified according to their shadow, using a light source and sensors.

The above devices all have the characteristic of being somewhat complex, expensive and unreliable. They also are only able to identify a specific type of object or in any case have to be adjusted, often through laborious and complex operations, in order to recognise different objects, but always only one kind of object at a time.

The main aim of the device of the invention is to obviate the above-mentioned drawbacks in the prior art, by providing a device for identifying objects which is simple, extremely reliable and easily adaptable for objects of various types.

One advantage of the invention is that it is particularly suitable for identifying recipient-shaped containers, such as cups, flasks, bottles and so on, and can be adapted to identify different shapes in very little time and through simple operations.

These aims and advantages are all attained by the device of the invention, as it is defined in the accompanying claims.

Further characteristics and advantages of the present invention will better emerge from the detailed description that follows, of an embodiment of the invention, illustrated in the form of a non-limiting example in the accompanying drawings, in which:

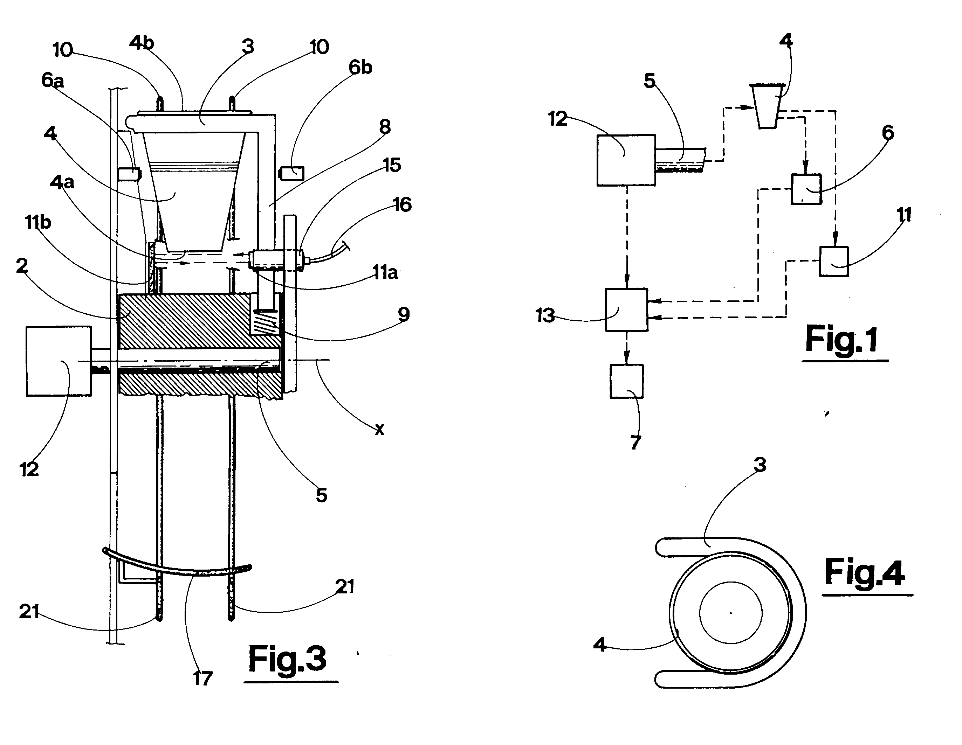

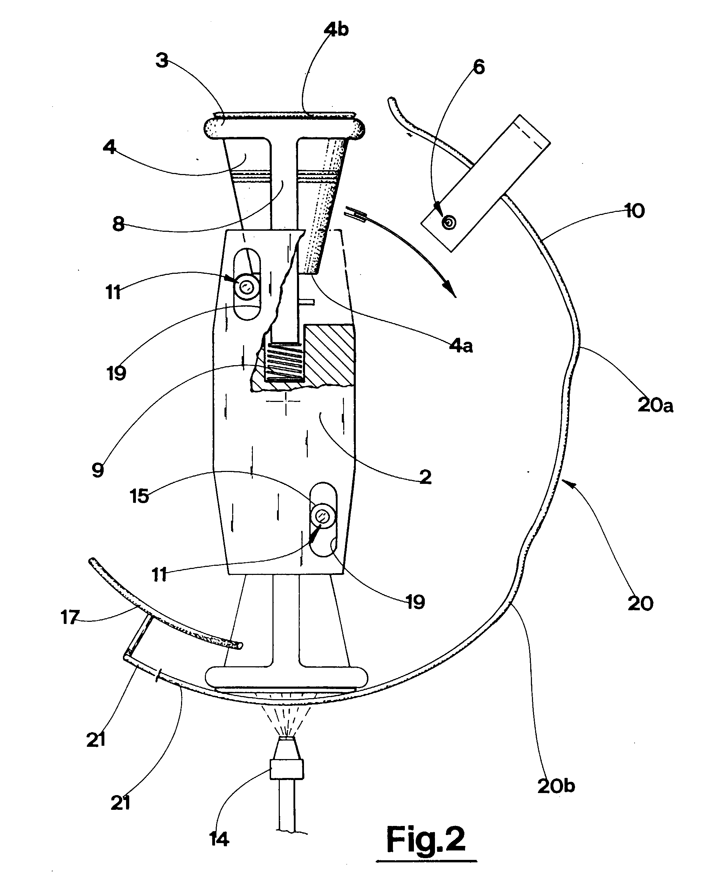

figure 1 is a functional block diagram of a part of the device;
figure 2 is a lateral view in vertical elevation of a part of the device, with some parts removed better to evidence others,
figure 3 is a lateral view from the left of figure 2, with some parts removed better to evidence others;
figure 4 is a plan view from above of a detail of figure 2.

With reference to the above-mentioned figures, 1 denotes a device for identifying objects, comprising a support 2 on which two sliders 8 are mounted, each bearing a seat 3. Each said seat 3 houses an object 4 which must be identified. The support 2 is mobile and driven by a drive shaft 5 to move an object 4 through a predetermined trajectory starting from an initial reference position. The drive shaft 5 is connected to the support 2 in such as way that an angular movement of the drive shaft 5 corresponds to a precise displacement of the object 4 along said trajectory. Each slider 8 is able to slide with respect to the support 2 in a normal direction to the advancement direction of the object, starting from an extreme position, where it is held by action of a spring 9.

In the described case, the object 4 is a plastic cup and the device 1 is part of a machine for collecting used plastic cups. This machine comprises a dispenser, of known type, which pays out a deposit return sum in exchange for a correctly identified cup. Further, the machine washes the cup by means of a nozzle 14 which when commanded to do so issues an upwardly-directed jet of water. Finally a bin, of known type and not included in the figures, is provided for collecting the used cups.

The seat 3 is constituted in the example by a cup-holder on which a cup rests by its upper rim lip. The holder is open on one side to allow for insertion and lateral expulsion of the cup. After washing, the mobile support 2 distances the washed cup and brings a next, dirty cup to the nozzle 14. Further provided is a fixed expeller 17 for removing the washed cup from the holder. The expeller 17 is constituted by a curved rod which is arranged crosswise to the advancement direction of the cup, with a predetermined inclination and such as not to interfere with the sliders 8. The advancing cup, drawn by the mobile support 2, impacts with its lateral wall against the expeller 17 and exits from the holder, crossing through the lateral aperture of the expeller 17. The shape and inclined arragement of the expeller 17 permit a gradual and sure exit of the cup from the holder. In the initial reference position the cup is straight (see the top of figure 2). In figure 2, at the bottom, a cup is shown which has already completed the trajectory and is upturned such as to evacuate any substances still contained therein, as well as to be in a correct position to receive the jet of liquid coming from the nozzle 14. The nozzle 14 is not absolutely necessary to the invention, if only a gravity-induced evacuation and not a washing of the cup is desired.

The support 2 is rotatable about a horizontal rotation axis X by intermittent rotations of half a complete turn. With each rotation thereof a cup is brought from the initial reference position to the upturned position, following a semicircular trajectory. The sliders 8 are mounted on the support 2 on diametrically opposite sides with respect to the rotation axis x, and are slidable in a radial direction with respect to the support 2.

The drive shaft 5 is the shaft of a stepper motor 12 which receives command signals and translates them into a pre-defined and constant rotation angle.

A fixed sensor 6 signals the presence of a cup transiting between the initial reference position and the upturned position. Said sensor 6 comprises two reciprocally-distanced elements, between which the transiting cup passes. One of said elements is constituted by a photoelectric cell 6a while the other thereof is constituted by a light source 6b directed towards the photoelectric cell 6a. When the cup passes between the two elements of the sensor 6, the photoelectric cell 6a obviously cannot pick up the light source 6b and so sends the first signal. When the cup has passed, the light source 6b - photoelectric cell 6a connection is restored and a second signal is emitted.

Means for detecting the angular position of the drive shaft 5 are provided, which are connected to the sensor 6 in such as way as to receive the signals sent by the sensor 6 and which detect two values relative to the positions of the drive shaft 5 on receiving the first and the second signal. The means for detecting comprise a counter 13 associated to the stepper motor 12 in such way as to be able to count the number of command pulses received from the stepper motor 12 between the first and the second signal.

A memory 7 is connected to the counter 13 and receives the above-mentioned values, comparing the resulting difference between the values with a reference value in order to know whether to accept the cup or not. The reference value represents an identifying characteristic of the acceptable cup type.

A fixed reference guide 10 is provided for interacting with the cup transiting along the trajectory, to establish the precise and invariable position of the cup with respect to the sensor 6. The reference guide 10 comprises two parallel rods which are symmetrical with respect to the median rotation plane of the cup, and are arced and coaxial with the rotation axis x.

Two sensors 11, each associated to a cup, are fixed to the support 2, each in a predetermined position with respect to the relative cup inserted into the holder. Each of said sensors 11 signals when an object is positioned before it, and is operatively associated to a first end 4a of the respective cup.

The reference guide 10, made up of two rods, is prolonged to become a shaped guide 20 which opposes the spring 9 force and contacts with the upper end 4b of the cup transiting along said trajectory; and on contact with said upper end 4b commands a precise and invariable displacement of the cup with respect to the support 2. The shaping of the shaped guide 20 causes the cup to shift radially towards the axis of the support 2 in the following way: a first tract 20a of the guide 20 moves the cup towards the sensor 11, while a second tract 20b allows the spring 9 to push the cup away from the sensor 11.

Each sensor 11 is positioned with respect to its slider 8 in such a way that, due to the alternating motion imposed by the shaped guide 20, the first end 4a of a cup of the type acceptable by the machine nears the sensor 11 such as to intercept it; after which it distances therefrom and no longer intercepts. More precisely, the first end 4a of the cup intercepts the sensor 11 while the cup itself performs, along its semcircular trajectory, a displacement of a degree which is an indicator of the distance between the two opposite ends 4a and 4b of the cup, which is equal to the length of the cup itself.

The sensor 11 emits a first signal when the first end 4a intercepts and a second signal when said first end 4a no longer intercepts. The counter 13 is connected to the sensor 11 in such a way as to receive the signals provided by the sensor 11 and calculate, at the moment of reception of each signal, the corresponding value of the drive shaft 5 position. The memory 7 receives the two position values and compares the difference between them (which difference represents an indication of the corresponding displacement of the cup) with a reference value; thus the object (in this case a plastic cup) is accepted or rejected on the basis of this comparison.

The sensor 11 comprises a reflector photoelectric cell 11a and a reflex reflector 11b, distanced from and facing one another. When the second end 4b of the cup enters between the reflex reflector 11b and the photoelectric cell 11a, said photoelectric cell 11a emits a signal directed to the counter 13 through a wire 16. The photoelectric cell 11a is mounted on a bearing 15 to avoid winding the wire 16 up due to the rotation of the support 2. Each sensor 11 is removably fixed to the support 2 and is able to slide within a hollow seat 19 in the same sliding direction as a relative cursor 8. This is so that the sensor 11 can be correctly positioned where a a cup of a different height is to be identified.

The reference guide 10 and the shaped guide 20 are shaped and arranged such as to interact with the second end 4b of the cup in order to prevent the cup from exiting from the holder due to the effect of centrifugal force during rotation of the support. To this end the shaped guide 20 is lengthened by an extension 21, which follows the cup trajectory right up to the expeller 17, and which is also formed by two arced parallel rods. This doubling of the reference guide 10, the shaped guide 20 and the extension 21 improves their action on the cup and further permits the nozzle 14 to wash the inside of the cup without difficulty when said cup is in the second position.

Other means for assessing the angular position of the drive shaft 5 might be provided, such as for example an encoder, of known type and not shown in the figures, and aimed at converting the angular positions of the drive shaft 5 into digital data which can be transmitted to the memory 7.

The sensors 6 can be of other type than the type described, such as for example direct photoelectric cells.

In alternative embodiments, the support 2 can exhibit three or more seats 3 for the cups, each being mounted on a respective slider 8 and arranged circumferentially at a regular angular distance.

The device functions as follows: a cup is inserted in the seat 3 in the start reference position, after which the drive shaft 5 is rotated about the axis x and the support 2 performs a half-turn about said axis x. During this rotation the cup cannot exit from the holder thanks to the reference guide 10, the shaped guide 20 and the extension 21. If the cup is of the type acceptable to the machine, the sensor 6 provides the counter 13 with two signals which are immediately translated into an angular displacement of the drive shaft 5. To this displacement corresponds a cup displacement equal to the height of the cup in the advancement direction to a prefixed distance from the first end 4a of the cup. For the cup to be acceptable, this height must correspond to a value contained in the memory 7.

The signals provided by the sensors 11 are translated into an angular displacement of the drive shaft 5, which provides an indication of the height of the cup, that is, the distance between the first end 4a intercepted by the sensor 11 and the second end 4b. The correlation between the displacement of the drive shaft 5 and the distance between the second end 4b and the first end 4a of the cup is precise and invariable for each cup, being linked to the shape of the shaped guide 20.

If the device 1 cannot identify the cup, in a first embodiment of the invention the support goes backwards by half a turn to bring said cup back in to the initial reference position and the device blocks until the undesired cup is removed from the seat 3. In a second and preferred embodiment, the cup is expelled and ejected into a special container provided for rejected cups.

The reference guide 10 has as its principal function that of stabilizing invariably, each time the sensor 6 measures the cross-dimension of the cup, the distance between the first end 4b of the cup and the sensor 6 itself. Obviously the first end 4b of the cup has to be in contact with the reference guide 10 when the cup passes before the sensor, which is guaranteed by the action of the spring 9.

The reference values can be memorized in the memory 7 (that is, the height and diameter at a certain distance from the reference end) relative to two or more cups. in this way the device is programmed to accept two or more types of cup at the same time.

The reading of the sensors 6 and 11 is of the differential type, and has the advantage of eliminating some kinds of error due to intrinsic shortcomings of the sensors.

One advantage of the invention is that it includes a faculty of self-learning with regard to the reference values to be memorized in the memory 7 in the case of a change of format of the type of object to be considered acceptable.

A further advantage of the invention is that the identification of the cup happens while the cup is moved towards the washing operation.

## Claims

1. A device for identifying objects, comprising :
a support (2), provided with at least one seat (3) for housing an object (4) to be identified, which support (2) is mobile by means of a drive shaft (5), and moves the object (4) according to a predetermined trajectory starting from an initial reference position;
a fixed sensor (6), for signalling when an object (4) is positioned before said fixed sensor (6),
and which is associated to the object (4) when said object (4) is transiting along said trajectory such as to emit a first signal at a moment in which said object (4) intercepts said fixed sensor (6);
a fixed reference guide (10), which interacts with the object (4) when said object (4) is transiting along said trajectory, for establishing a precise and invariable position of the object (4) in relation to the fixed sensor (6) as it passes the sensor (6);
means for detecting an angular position of the drive shaft (5), connected to the fixed sensor (6) in such a way as to receive a signal emitted by said fixed sensor (6) and thereupon to detect a first value of the angular position of the drive shaft (5);
a memory (7), connected to the means for detecting an angular position of the drive shaft (5), for calculating the angular position of the drive shaft (5), which receives said first value and compares same with a reference value in order to rule on acceptability of said object (4).

2. A device as in claim 1, characterized in that the fixed sensor (6) emits a second signal when the object (4) passes out from before it, whereupon said means for detecting provides a second value of an angular position of the drive shaft (5); the memory (7) receives said second value and compares a difference between the first value and the second value with a reference value, for deciding whether or not the object (4) can be accepted.

3. A device as in claims 1 or 2, characterized in that a slider (8) is mounted on the support (2), which slider (8) bears the seat (3) and which slider (8) is able to slide with respect to said support (2) in a normal direction to an advancement direction of the slider (8), starting from an extreme position in which it is held by action of a spring (9); the fixed reference guide (10) interacting with the object (4) in transit in opposition to the action of the spring (9).

4. A device for identifying objects comprising :
a support (2), provided with at least one seat (3) for housing at least one object (4) to be identified, which support (2) is mobile by command of a drive shaft (5), and moves the at least one object (4) according to a predetermined trajectory; the at least one object (4) being mounted in the at least one seat (3) of the support (2) and said seat (3) being moveable in a direction normal to an advancement direction defined by the predetermined trajectory of the at least one object (4) starting from a position in which said at least one object (4) is held by action of a spring (9); a sensor (11) fixed to the support (2) in a predetermined position, said sensor (11) emitting a signal when the at least one object (4) is positioned therebefore; said sensor (11) interacting with a first end (4a) of the at least one object (4), such as to emit a signal when said first end (4a) intercepts the sensor (1); a shaped guide (20) also being provided and being associated, when said at least one object (4) is transiting along the trajectory, and due to action of said spring (9), with a second end (4b) of the object (4), which second end (4b) is opposite to said first end (4a); said shaped guide (20) being shaped such as to cause a precise and invariable movement of the at least one object (4) in relation to the support (2); means for detecting an angular position of the drive shaft (5), connected to the sensor (11) in such a way as to receive the signal emitted by the sensor (11) and to calculate, on receiving said signal, a value of the position of the drive shaft (5); a memory (7), connected to the means for detecting an angular position of the drive shaft (5) in such a way as to receive said reference value and accordingly to accept or refuse the at least one object (4).

5. A device as in claim 4, characterized in that the shaped guide (20) comprises a first tract (20a) which commands a displacement of the at least one object (4) towards the sensor (11) and a second tract (20b) which allows, in combination with the action of the spring (9), a displacement of the at least one object (4) away from the sensor (11), such that the first end (4a) of the at least one object (4) of a type acceptable to the device is intercepted during the displacements by the sensor (11) over a predetermined distance of the trajectory of said at least one object (4); the sensor (11) emits a second signal at a moment when the first end (4a) of the at least one object (4) no longer intercepts the sensor (11); the means for detecting calculate a second value of the angular position of the drive shaft (5) as soon as the second signal is received thereby; the memory (7) receives said second value and compares a difference between the first value and the second value with a reference value such as to define the at least one object (4) as acceptable or not.

6. A device as in claim 4 or 5, characterized in that the sensor (11) is positioned on the support (2) facing in a direction in which the at least one object (4) can be expelled from the seat (3).

7. A device as in any of the preceding claims, characterized in that: the drive shaft (5) is that of a stepper motor (12) which can receive command pulses and translate such pulses into a rotation of a defined and constant magnitude; said means for detecting the angular position of the drive shaft (5) comprising a counter (13) for counting a number of command pulses received from the stepper motor (12).

8. A device as in any of the preceding claims from 1 to 6, characterized in that the means for detecting the angular position of the drive shaft (5) comprise an encoder.

9. A device as in any of the preceding claims, characterized in that the memory (7) contains the reference values relative to at least two different objects (4).

## Patentansprüche

1. Vorrichtung zur Identifizierung von Objekten mit:
einer Trageinrichtung (2) mit wenigstens einem Aufnahmesitz (3) zur Aufnahme eines zu identifizierenden Objekts (4), welche Tragvorrichtung mittels einer Antriebswelle (5) bewegt ist und das Objekt (4) gemäß einer vorbestimmten Bahn ausgehend von einem anfänglichen Referenzpunkt bewegt;
einem fixierten Sensor (6) zum Signalisieren, wann ein Objekt (4) vor dem fixierten Sensor (6) positioniert ist und welcher dem Objekt (4) zugeordnet ist, wenn das Objekt (4) sich entlang der Bahn fortbewegt, wobei ein erstes Signal zu dem Zeitpunkt abgegeben wird, zu dem das Objekt (4) an dem fixierten Sensor (6) vorbei bewegt wird;
einer festen Referenzführung (10), die mit dem Objekt (4) zusammenwirkt, wenn dieses sich entlang der Bahn bewegt zum Festlegen einer genauen unveränderlichen Position des Objekts (4) in Relation zum fixierten Sensor (6) beim Vorbeiführen am Sensor (6);
einer Erfassungseinrichtung zur Erfassung einer Winkelposition der Antriebswelle (5) in Verbindung mit dem fixierten Sensor (6) in einer solchen Weise, daß ein von dem Sensor (6) ausgegebenes Signal empfangen und gemäß diesem ein erster Wert der Winkelposition der Antriebswelle (5) erfaßt ist;
einem Speicher (7) in Verbindung mit der Erfassungseinrichtung der Winkelposition der Antriebswelle (5) zur Berechnung der Winkelposition der Antriebswelle (5), welcher den ersten Wert empfängt und diesen mit einem Referenzwert zur Entscheidung über eine Akzeptanz des Objekts vergleicht.

2. Vorrichtung nach Anspruch 1, dadurch gekennzeichnet, daß der fixierte Sensor (6) ein zweites Signal bei Fortbewegung des Objekts (4) von ihm abgibt, wobei die Erfassungseinrichtung einen zweiten Wert einer Winkelposition der Antriebswelle (5) erfaßt und der Speicher (7) diesen zweiten Wert empfängt und eine Differenz zwischen dem ersten Wert in den zweiten Wert mit einem Referenzwert vergleicht, um über eine Akzeptanz des Objekts (4) zu entscheiden.

3. Vorrichtung nach Anspruch 1 oder 2, dadurch gekennzeichnet, daß ein Verschiebeelement (8) auf der Trageinrichtung (2) montiert ist, welches Verschiebeelement (8) den Aufnahmesitz (3) aufweist und in einer Normalrichtung bezüglich der Trageinrichtung (2) verschiebbar in eine vorgerückte Stellung des Verschiebeelements (8) ist,beginnend von einer Extremposition, in der es mittels einer Feder (9) gehalten ist, wobei die fixierte Referenzführung (9) mit dem Objekt (4) der Bewegung entgegengesetzt zur Wirkung der Feder (9) zusammenwirkt.

4. Vorrichtung zur Identifizierung von Objekten mit:
einer Trageinrichtung (2) mit wenigstens einem Sitz (3) zur Aufnahme wenigstens eines zu identifizierenden Objekts (4), welche Trageinrichtung (2) mittels einer Antriebswelle (5) beweglich ist und wenigstens ein Objekt (4) gemäß einer vorbestimmten Bahn bewegt, wobei das wenigstens eine Objekt (4) in dem wenigstens einem Sitz (3) der Trageinrichtung (2) montiert ist und der Sitz (3) in einer Richtung normal zu einer Fortbewegungsrichtung, die durch die vorbestimmte Bahn des wenigstens einen Objekts (4) bestimmt ist,bewegbar ist, beginnend von einer Position, in der das wenigstens eine Objekt (4) mittels einer Feder (9) gehalten ist;
einem Sensor (11), der an der Trageinrichtung (2) in einer vorbestimmten Position fixiert ist, wobei der Sensor (11) ein Signal ausgibt, wenn das wenigstens eine Objekt (4) vor ihm angeordnet ist und der Sensor (11) mit einem ersten Ende (4a) des wenigstens einen Objekts (4) zusammenwirkt, so daß ein Signal ausgegeben wird, wenn das erste Ende (4a) am Sensor (1) erfaßt wird;
mit einer geformten Führung (20), die, wenn sich das wenigstens eine Objekt (4) entlang der Bahn bewegt und aufgrund der Wirkung der Feder (9) ,mit einem zweiten Ende (4b) des Objekts (4) assoziiert ist, welches zweite Ende (4b) zum ersten Ende (4a) gegenüber liegt, wobei die geformte Führung (20) zur genauen und unveränderlichen Bewegung des wenigstens einen Objekts (4) relativ zur Trageinrichtung (2) geformt ist;
einer Erfassungseinrichtung zur Erfassung einer Winkelposition der Antriebswelle (5), die mit dem Sensor (11) in solcher Weise verbunden ist, daß sie das vom Sensor (11) ausgegebene Signal empfängt und bei Empfang des Signals einen Wert der Position der Antriebswelle (5) berechnet; und
einer Speichereinrichtung (7) in Verbindung mit der Erfassungseinrichtung der Winkelposition der Antriebswelle (5) in einer solchen Weise, daß der Referenzwert empfangen wird und demgemäß das wenigstens eine Objekt (4) akzeptiert oder zurückgewiesen wird.

5. Vorrichtung nach Anspruch 4, dadurch gekennzeichnet, daß die geformte Führung (20) eine erste Führungsbahn (20a) aufweist, die eine Verstellung des wenigstens einen Objekts (4) in Richtung Sensor (11) bewirkt, und eine zweite Führungsbahn (20b), die in Zusammenwirkung mit der Wirkung der Feder (9) eine Verstellung des wenigstens einen Objekts (4) weg vom Sensor (11) ermöglicht, so daß das erste Ende (4a) des wenigstens einen Objekts (4) eines akzeptierbaren Typs für die Vorrichtung während der Verstellungen am Sensor (11) über eine vorbestimmte Entfernung entlang der Bahn des wenigstens einen Objekts (4) vorbeigeführt ist, wobei der Sensor (11) ein zweites Signal zu dem Zeitpunkt ausgibt, indem das erste (4a) des wenigstens einen Objekts (4) nicht länger vom Sensor (11) erfaßbar ist, und wobei die Erfassungseinrichtung einen zweiten Wert der Winkelposition der Antriebswelle (5) direkt bei Empfang des zweiten Signals berechnet, dieser zweite Wert von der Speichereinrichtung (7) empfangen und eine Differenz zwischen dem ersten und dem zweiten Wert mit einem Referenzwert verglichen wird, um festzustellen, ob das wenigstens eine Objekt (4) akzeptierbar ist oder nicht.

6. Vorrichtung nach Ansprüchen 4 oder 5, dadurch gekennzeichnet, daß der Sensor (11) an der Trageinrichtung (2) so positioniert ist, daß er in eine Richtung weist, in der das wenigstens eine Objekt (4) aus dem Sitz (3) herauswerfbar ist.

7. Vorrichtung nach einem der vorangehenden Ansprüche, dadurch gekennzeichnet, daß die Antriebswelle (5) eine Antriebswelle eines Schrittmotors (12) ist, der Befehlsimpulse empfangen und solche Impulse in eine Drehung mit einer definierten und konstanten Größe übersetzen kann, wobei die Erfassungseinrichtung der Winkelposition der Antriebswelle (5) eine Zähleinrichtung (13) zum Zählen einer Anzahl von Befehlsimpulsen aufweist, welche von dem Schrittmotor (12) empfangen werden.

8. Vorrichtung nach einem der vorangehenden Ansprüche 1 bis 6, dadurch gekennzeichnet, daß die Erfassungseinrichtung der Winkelposition der Antriebswelle (5) einen Dekodierer aufweist.

9. Vorrichtung nach einem der vorangehenden Ansprüche, dadurch gekennzeichnet, daß die Speichereinrichtung (7) Referenzwerte bezüglich wenigstens zwei unterschiedlicher Objekte (4) enthält.

## Revendications

1. Dispositif destiné à l'identification d'objets, comprenant :
un support (2) pourvu d'au moins un siège (3) servant à loger un objet (4) devant être identifié, ce support (2) étant déplaçable au moyen d'un arbre d'entraînement (5) et déplaçant l'objet (4) selon une trajectoire prédéterminée partant d'une position de référence initiale;
un capteur fixe (6), servant à signaler le moment où un objet (4) est disposé avant ledit capteur fixe (6), et qui est associé à l'objet (4) lorsque ledit objet (4) se déplace le long de ladite trajectoire, de manière à émettre un premier signal à un moment où ledit objet (4) intercepte ledit capteur fixe (6);
un guide de référence (10) fixe, qui coopère avec l'objet (4) lorsque ledit objet (4) se déplace le long de ladite trajectoire, afin d'établir une position précise et invariable de l'objet (4) par rapport au capteur fixe (6) lorsqu'il dépasse le capteur (6);
un moyen servant à détecter une position angulaire de l'arbre d'entraînement (5), relié au capteur fixe (6), de manière à recevoir un signal émis par ledit capteur fixe (6) et à mesurer ensuite une première valeur de la position angulaire de l'arbre d'entraînement (5);
une mémoire (7), reliée au moyen servant à détecter une position angulaire de l'arbre d'entraînement (5), afin de calculer la position angulaire de l'arbre d'entraînement (5), qui reçoit ladite première valeur et la compare à une valeur de référence en vue de réglementer l'acceptabilité dudit objet (4).

2. Dispositif selon la revendication 1, caractérisé en ce que le capteur fixe (6) émet un deuxième signal lorsque l'objet (4) passe devant lui, à la suite de quoi ledit moyen de détection fournit une deuxième valeur d'une position angulaire de l'arbre d'entraînement (5); la mémoire (7) reçoit ladite deuxième valeur et compare une différence entre la première valeur et la deuxième valeur avec une valeur de référence, afin de décider si l'objet (4) peut être accepté ou non.

3. Dispositif selon la revendication 1 ou 2, caractérisé en ce qu'un coulisseau (8) est monté sur le support (2), ce coulisseau (8) portant sur le siège (3) et le coulisseau (8) pouvant coulisser par rapport audit support (2) dans une direction perpendiculaire à la direction d'avancement du coulisseau (8), à partir d'une position extrême dans laquelle il est maintenu par l'action d'un ressort (9); le guide de référence (10) fixe coopérant avec l'objet (4) lors d'un déplacement à l'opposé de l'action du ressort (9).

4. Dispositif d'identification d'objets, comprenant :
un support (2) pourvu d'au moins un siège (3) servant à loger au moins un objet (4) devant être identifié, ce support (2) étant déplaçable par la commande d'un arbre d'entraînement (5), et déplaçant le au moins un objet (4) selon une trajectoire prédéterminée; le au moins un objet (4) étant monte dans le au moins un siège (3) du support (2) et le siège (3) étant déplaçable dans une direction perpendiculaire à la direction d'avancée définie par la trajectoire prédéterminée du au moins un objet (4), à partir d'une position dans laquelle ledit au moins un objet (4) est maintenu par l'action d'un ressort (9); un capteur (11) fixé au support (2) dans une position prédéterminée, ledit capteur (11) émettant un signal lorsque le au moins un objet (4) est disposé avant lui; ledit capteur (11) coopérant avec une première extrémité (4a) du au moins un objet (4) de manière à émettre un signal lorsque ladite première extrémité (4a) intercepte le capteur (1); un guide profilé (20) étant également prévu et étant associé, lorsque ledit au moins un objet (4) se déplace le long de la trajectoire, et en raison de l'action dudit ressort (9), à une deuxième extrémité (4b) de l'objet (4), cette deuxième extrémité (4b) étant opposée à ladite première extrémité (4a); ledit guide profilé (20) étant formé de manière à provoquer un déplacement précis et invariable du au moins un objet (4) par rapport au support (2); un moyen servant à détecter la position angulaire de l'arbre d'entraînement (5), relié au capteur (11) de manière à recevoir le signal émis par le capteur (11) et à calculer, à la réception dudit signal, une valeur de la position de l'arbre d'entraînement (5); une mémoire (7), reliée au moyen de détection de la position angulaire de l'arbre d'entraînement (5), de manière à recevoir ladite valeur de référence et, par conséquent, à accepter ou à refuser le au moins un objet (4).

5. Dispositif selon la revendication 4, caractérisé en ce que le guide profilé (20) comprend un premier tronçon (20a) qui commande un déplacement du au moins un objet (4) vers le capteur (11) et un deuxième tronçon (20b) qui permet, en combinaison avec l'action du ressort (9), un déplacement du au moins un objet (4) à l'écart du capteur (11), de manière que la première extrémité (4a) du au moins un objet (4) d'un type acceptable pour le dispositif soit interceptée durant les déplacements par le capteur (11) sur une distance prédéterminée de la trajectoire dudit au moins un objet (4); le capteur (11) émet un deuxième signal à un moment où la première extrémité (4a) du au moins un objet (4) n'intercepte plus le capteur (11); le moyen de mesure calcule une deuxième valeur de la position angulaire de l'arbre d'entraînement (5) dès que le deuxième signal est reçu de ce fait; la mémoire (7) reçoit ladite deuxième valeur et compare la différence entre la première valeur et la deuxième valeur avec une valeur de référence de manière à définir le au moins un objet (4) comme étant acceptable ou non.

6. Dispositif selon la revendication 4 ou 5, caractérisé en ce que le capteur (11) est placé sur le support (2) tourné dans une direction dans laquelle le au moins un objet (4) peut être expulsé du siège (3).

7. Dispositif selon l'une quelconque des revendications précédentes, caractérisé en ce que : l'arbre d'entraînement (5) est celui d'un moteur pas à pas (12) qui peut recevoir des impulsions de commande et convertir de telles impulsions en une rotation d'une amplitude définie et constante; ledit moyen de détection de la position angulaire de l'arbre d'entraînement (5) comprenant un compteur (13) destiné à compter le nombre d'impulsions de commande reçues par le moteur pas à pas (12).

8. Dispositif selon l'une quelconque des revendications 1 à 6 précédentes, caractérisé en ce que le moyen de détection de la position angulaire de l'arbre d'entraînement (5) comprend un codeur.

9. Dispositif selon l'une quelconque des revendications précédentes, caractérisé en ce que la mémoire (7) contient les valeurs de référence par rapport à au moins deux objets (4) différents.
